(19) Europäisches Patentamt
European Patent Office
Office européen des brevets

(11) Veröffentlichungsnummer: **0 133 570**
**B1**

(12) **EUROPÄISCHE PATENTSCHRIFT**

(45) Veröffentlichungstag der Patentschrift: **25.04.90**

(51) Int. Cl.$^5$: **B 06 B 1/02**

(21) Anmeldenummer: **84109368.5**

(22) Anmeldetag: **07.08.84**

(54) **Anregeschaltung für piezoelektrische Schallgeber.**

(30) Priorität: **10.08.83 DE 3328907**

(43) Veröffentlichungstag der Anmeldung:
**27.02.85 Patentblatt 85/09**

(45) Bekanntmachung des Hinweises auf die Patenterteilung:
**25.04.90 Patentblatt 90/17**

(84) Benannte Vertragsstaaten:
**AT BE CH DE FR GB IT LI NL SE**

(56) Entgegenhaltungen:
**DE-A-2 329 740**
**FR-A-2 342 616**
**FR-A-2 392 537**
**GB-A-2 054 238**
**US-A-3 989 963**

**UND-ODER-NOR + STEUERUNGSTECHNIK, Band 13, Nr. 9, 1983, Seiten 70-72, Mainz, DE; M. BARTEL: "Hörsignale 'unsichtbar'"**

(73) Patentinhaber: **Siemens Aktiengesellschaft**
**Wittelsbacherplatz 2**
**D-8000 München 2 (DE)**

(72) Erfinder: **Angerer, Richard, Dipl.-Ing.**
**Rodung 11**
**D-8024 Oberhaching (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 133 570 B1

Courier Press, Leamington Spa, England.

**Beschreibung**

Die vorliegende Erfindung bezieht sich auf eine Anregeschaltung, wie sie im Oberbegriff des Patentanspruchs 1 angegeben ist.

Aus der DE—28 23 155 A, insbesondere Fig. 5, der GB—2 104 257A, insbesondere Fig. 1, der GB—2 104 273, insbesondere Fig. 1, der GB—2 054 238A, der US—3 989 963A, DE—2 329 740A und aus Terman "Radio Engineers' Handbook", S. 494—497, McGraw-Hill, Copyright 1943, sind als technologischer Hintergrund zur vorliegenden Erfindung Schaltungen zur Schwingungsanregung eines piezoelektrischen Schallgebers bekannt.

Ein relevanter Teil solcher Schaltungen ist in Fig. 1 der vorliegenden Beschreibung als Stand der Technik wiedergegeben, wobei dieser Schaltungsanteil in der nachfolgenden Weise arbeitet. In Reihe mit den Anschlüssen 2 und 3 für die Stromversorgung liegen der piezoelektrische Schallgeber 1, eine Induktivität und ein Schalter 5. Sobald zwischen den Anschlüssen 2 und 3 eine elektrische Spannung anliegt und der Schalter geschlossen ist, lädt sich die Induktivität 14 mit elektrischer Energie auf. Erfolgt ein Öffnen des Schalters 5, der von einer Steuereinrichtung 6 betätigt wird, bricht der durch die Induktivität 14 fließende elektrische Strom schlagartig zusammen. Dies ergibt eine elektrische Impulsstoßanregung für den Schallgeber 1, der dadurch zu Schwingungen angeregt wird. Angeregt wird nicht nur die Schwingung mit der Frequenz der Grundwellenresonanz des Schallgebers 1, sondern es werden auch andere Schwingungsmoden angeregt. Dies ist ein Nachteil dieser bekannten Schaltung. Ein weiterer Nachteil ist, daß relativ hohe elektrische Spannung zwischen den Anschlüssen 2 und 3 anzulegen ist, um überhaupt nennenswerte Schalleistung zu erzeugen.

Oben erörterter Stand der Technik (DE—A—2 707 524 und DE—A—2 329 740) beschreibt auch eine solche Schaltung, die mittels einer Diode eine Gleichrichtung der mit Hilfe der Induktivität erzeugten Hochspannung vorsieht. Der Wandler wird mit dieser Gleichspannung nur polarisiert, jedoch nicht angeregt. Um elektroakustische Schwingungen des so mit Gleichspannung vorpolarisierten Wandlers zu erreichen, wird der in lediglich anderem Zusammenhang bekannte Schalter, hier jedoch mit einer für den Wandler somit vorgegebenen Schwingungsfrequenz angesteuert. Das heißt, es werden dort erzwungene Schwingungen des Wandlers erzeugt. Damit entsteht aber das Problem, die andauernde gegenseitige Abstimmung dieser Anregungsfrequenz und der Eigenfrequenz des Wandlers, die sich von den augenblicklichen Betriebsbedingungen abhängig stets ändert, zu bewältigen, angenommen eine solche Abstimmung ist vorgesehen, was wegen des genannten Problems keineswegs stets vorauszusetzen ist. Zur Lösung dieses Problems ist gemäß DE—A—2 219 761 nämlich noch die zusätzliche Anwendung einer Rückkopplung, die mit entsprechendem Zusatzaufwand verbunden ist, vorgesehen worden.

Ebenfalls mit einer Rückkopplungsschaltung ausgerüstet ist die Anregeschaltung der DE—A—2 219 761. Es ist dort ein Handschalter zum Ein- und Ausschalten des Geräts vorgesehen, denn es handelt sich dort um ein Handgerät. Diese Anregeschaltung enthält auch noch eine Drossel, die dazu dient, während des Betriebs Hochfrequenzspannungen, die im Wandlerkreis entstehen, daran zu hindern, in die Gleichstromversorgung zu gelangen. Diese Drossel ist eine Funkentstörung. Eine Funktion im Sinne der noch nachfolgend zu beschreibenden vorliegenden Erfindung kann diese Drossel nicht ausüben, da dort kein taktweises Schalten vorgesehen ist und die Drossel hinsichtlich ihrer Induktivität nicht auf die Kapazität des Schallgebers abgestimmt ist.

Für die Schaltung nach der DE—A—2 329 740 ist eine Steuerung mit verschiedenen Wechselstromfrequenzen vorgegeben, um entsprechend frequenzverschiedene Ultraschallwellen auszusenden, die als unterschiedliche Kommandosignale dienen, so daß jegliche Abstimmung auf die Eigenfrequenz des Wandlers entfällt.

Die oben angegebene, bekannte Grundschaltung ist in einigen der eingangs genannten Druckschriften des Standes der Technik in Richtungen weiterentwickelt worden, die von der noch nachfolgend zu beschreibenden Erfindung deutlich abweichen. So ist z.B. in der US—A—3 989 963 eine solche Grundschaltung beschrieben, die zwischen der Induktivität und den mehreren Wandlern zusätzlich Zenerdioden und Sperrdioden besitzt. Diese Dioden dienen dazu, eine Entkopplung zwischen der Induktivität der Schaltungsinduktivität und der des jeweiligen der vorgesehenen Wandler zu bewirken. In der GB—A—2 054 238 ist beschrieben, die Schaltung nach Figur 1 ohne Abstimmung von Induktivität und Wandler zueinander zu betreiben, und zwar den Wandler mit einer durch einen Timer fein einzustellenden Frequenz anzuregen, die ungefähr bis 3% größer als die natürliche Schwingfrequenz des Wandlers ist.

Es ist eine Aufgabe der vorliegenden Erfindung, eine möglichst einfache Anregeschaltung anzugeben, mit der ein piezoelektrischer Schallgeber in möglichst nur einem Schwingungsmode anzuregen bzw. zu betreiben ist.

Diese Aufgabe wird mit einer Anregeschaltung nach dem Oberbegriff des Anspruchs 1 erfindungsgemäß mit Hilfe der Merkmale des Kennzeichens des Anspruchs 1 gelöst. Weitere Ausgestaltungen und Weiterbildungen der Erfindung gehen aus den Unteransprüchen hervor.

Der Erfindung liegt der Gedanke zugrunde, die eigentliche bekanntermaßen verwendete, frequenzmäßig abgestimmte Quelle der Spannungsversorgung wirkungsmäßig in die erfindungsgemäße Anregeschaltung zu verlegen. Es wird hierzu lediglich eine Induktivität benötigt, die zwischen den Anschlüssen 2 und 3 in Reihe zu derjenigen Parallelschaltung liegt, die aus dem Schallwandler und dem Element mit der taktweisen Schalterfunktion besteht.

Weitere Erläuterungen der Erfindung gehen aus der nachfolgenden, anhand der Figuren gegebenen Beschreibung hervor. Es zeigen:

Fig. 1 eine bekannte Schaltung,

Fig. 2 eine erfindungsgemäße Schaltung,

Fig. 3 Weiterbildungen einer erfindungsgemäßen Schalbis 5 tung und

Fig. 6 die Schaltung eines Zusatzes zu einer erfindungsgemäßen Schaltung.

Fig. 2 zeigt mit 14 bezeichnet diese Induktivität zusammen mit zur Fig. 1 bereits beschriebenen Elementen.

Zur Erläuterung der Betriebsweise und Funktion der Anregeschaltung nach Fig. 2 sei davon ausgegangen, daß die Versorgungsspannung an den Anschlüssen 2 und 3 bereits anliegt. Der Schalter 5 ist geschlossen. Durch die Induktivität 14 und über den geschlossenen Schalter 5 fließt ein elektrischer Strom I. Sobald jetzt der Schalter 5, gesteuert durch die Funktion des Elementes 6, geöffnet wird, tritt eine extrem große Stromänderung in der Induktivität 14 auf, die zum Entstehen einer hohen elektrischen Spannung am Schalter 5 und damit am Schallgeber 1 führt.

Da jedoch die Resonanzfrequenz des Reihenschwingkreises, bestehend aus Schallgeber 1 und Innduktivität 14, und zwar insbesondere durch entsprechende Bemessung dieser Induktivität 14, so gewählt ist, daß sie mit der ausgewählten mechanischen Resonanzfrequenz des Schallgebers 1 übereinstimmt, erfolgt eine Resonanzfrequenzanregung des Schallgebers 1. Der Schallgeber erhält seine elektrische Anregung praktisch nur auf dieser ausgewählten Resonanzfrequenz, was dazu führt, daß unerwünschte Nebenschwingungsmoden vermieden sind.

Die bei Öffnen des Schalters 5 an den Anschlüssen des Schallgebers 1 auftratende maximale elektrische Spannung hat eine gegenuber der Versorgungsspannung, die an den Anschlüssen 2 und 3 anliegt, erhebliche Spannungsüberhöhung.

Prinzipiell gelten für die Erfindung die nachfolgenden physikalischen Beziehungen:

$$I(t) = 1/L \int_0^T U_L(t)\,dt \approx U \cdot T/L \qquad (1)$$

$$W = 1/2 \cdot L \cdot I^2 = 1/2 \times U^2 \cdot T^2/L \qquad (2)$$

$$U_c = I \cdot \sqrt{L/C} \qquad (3)$$

$$U_c = U/R_L \sqrt{L/C} \qquad (4)$$

$$U_c/U = 2 \cdot \pi \cdot f \cdot L/R_L \qquad (5)$$

$$2\pi f_o = \omega_o = 1/\sqrt{L \cdot C_o} \qquad (6)$$

$$U_c/U = 1/\omega_o \cdot R_L \cdot C_o \qquad (7)$$

Darin sind:

$I(t)$ der zeitabhängige Stromwert,

$L$ der Wert der Induktivität 14,

$U_L(t)$ die am Schalter 5 zeitabhängig auftretende überhöhte Spannung,

$T$ die Zeitdauer bzw. Schließzeit,

$W$ die in der Induktivität 14 gespeicherte Energie,

$C$ der elektrische Kapazitätswert des Schallgebers 1,

$U_C$ die am Schallgeber 1 anliegende elektrische Spannung bei geschlossenem Schalter 5,

$R_L$ ohmsher Widerstand der Induktivität 14,

$f_o$ die anzuregende Resonanzfrequenz.

Das Element 6 kann ein Zeitglied sein, mit dem wiederum die Schließzeit T zu bestimmen bzw. gegeben ist. Eine Weiterbildung der Erfindung besteht darin, die Schließzeit T automatisch durch Auswerten des Ladestromverlaufes der Induktivität 14 zu steuern. Dies ist in Fig. 3 gezeigt. Der Schalter 5 wird von einer Speicher-Flip-Flop-Schaltung 26 betätigt. Das Flip-Flop wird durch einen externen "Ein-"Impuls gesetzt. Dadurch wird der Schalter 5 geschlossen und es fließt durch die Induktivität 14 ein Strom I (t), der linear mit der Zeit t zunimmt (bis die Zeit T verstrichen ist). Der Strom I durch die Induktivität 14 wird mittels eines Stromfühlers 27 überwacht. Bei Überschreiten eines vorgegebenen Granzstromes wird durch den Schwellenwertschalter 28 das Flip-Flop 26 zurückgesetzt. Der Schalter 5 öffnet und unterbricht damit den Strom I(t) bei t = T.

Mit der Erfindung werden eine Reihe von erheblichen Vorteilen erreicht. Zum einen ist die Anregeschaltung nach der Fig. 2 und auch nach der Fig. 3 wenig aufwendig zu realisieren. Die Anregeenergie W ist in weiten Grenzen unabhängig von der an die Anschlüsse 2 und 3 anzulegenden Betriebsspannung. Die Einschaltdauer T kann sich automatisch ergeben und bedarf keiner besonderen Maßnahme. Die Anregung des Schallgebers 1 erfolgt mit hoher Anregespannung, ohne daß hierfür besonderer Aufwand zu treiben ist.

Weiterhin sind besonders wichtige Vorteile der Erfindung, daß keine Störmoden in der Schwingungsanregung des Schallgebers 1 auftreten. Hochfrequente Störmoden werdenn deshalb nicht angeregt, weil die Spannungsänderung am Schallgeber 1 bei der Erfindung nicht schlagartig erfolgt. Niederfrequente Störmoden werden nicht angeregt, weil innerhalb einer Schwingungsperiode eines niederfrequenten Schwingungsmode der elektrische Spannungsstoß durch einen jeweils weiteren Spannungsstoß mit entgegengesetzter Polarität kompensiert wird. Ein besonderer Abgleich ist für die Erfindung nicht erforderlich.

Vorteile ergeben sich aus der Erfindung sogar für eine Verwendung des Schallgebers 1 (auch) als Schallempfänger. Die Eigenkapazität C des Schallgebers 1 und die erfindungsgemäß vorgesehene Iduktivität L bilden einen Selektionskreis für den gewünschten Nutzmode der bei Empfang in dem Schallgeber zu erzeugenden mechanischen Empfangsschwingung.

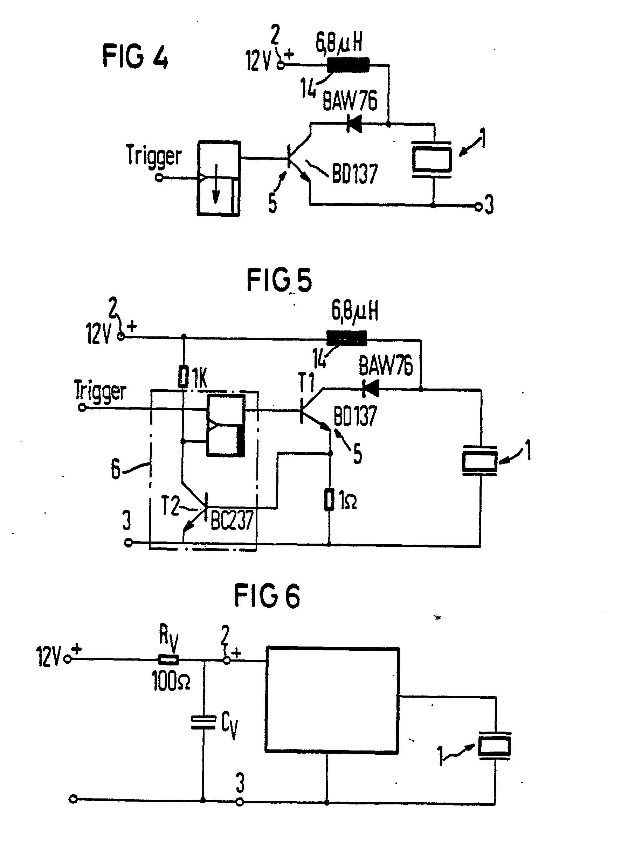

Eine erfindungsgemäße Anregungsschaltung kann z.B. mit 12 Volt Gleichspannung an den Anschlüssen 2 und 3 betrieben werden. Die Fig. 4 zeigt ein praktisches Schaltbild. In Fig. 4 sind solche Schaltungsangaben enthalten die dem Fachmann in die Lage versetzen, ein Ausführungsbeispiel der Erfindung nachzuarbeiten.

Fig. 5 zeigt die praktische Schaltung einer weiteren Ausführungsform der Erfindung, wobei Fig. 5 ebenfalls die für den Fachmann erforderlichen Datenangaben enthält. Um beim Durchschwingen der elektrischen Spannung am Schallgeber einen Kurzschluß der anliegenden Spannung an dem dann invers betriebenen Transistor $T_1$ zu vermeiden, erfolgt die Ankopplung an die Spule über eine Schaltdiode, z.B. BAW 76. Diese Diode entkoppelt bei negativen Spannungen den Schallgeber vom Transistor $T_1$. Mit dieser dargestellten Anregeschaltung wird eine Spannung von 150 Volt am Schallgeber 1 erzeugt.

In Fig. 6 ist noch ein Vorschaltkreis, bestehend aus einem Widerstand $R_V$ und einer Kapazität $C_V$, für die Versorgungsspannung zwischen den Anschlüssen 2 und 3 angegeben. Dieser fakultativ zu verwendende Vorschaltkreis dient dazu, zu vermeiden, daß bei im Betrieb auftretendem Kurzschluß am Schallgeber 1 die Versorgungsspannung zwischen den Anschlüssen 2 und 3 durch die Induktivität 14 nicht kurzgeschlossen wird. Für die Kapazität $C_V$ empfiehlt sich ein Wert von $2xW/U^2$. Die " black box" der Fig. 6 ist eine Schaltung nach Fig. 4 oder Fig. 5 mit dem Wandler 1.

**Patentansprüche**

1. Anregeschaltung mit einem piezoelektrischen Schallgeber (1) und mit Anschlüssen (2, 3) für eine Spannungsversorgung, die weiter noch aus einer Induktivität (14) und einem Element (5) mit Schalterfunktion besteht, wobei einerseits der Schallgeber (1) und diese Induktivität (14) und andererseits diese Induktivität (14) und das Element (5) mit Schalterfunktion jeweils in Reihe zu den Anschlüssen (2, 3) für die Spannungsversorgung liegen, gekennzeichnet dadurch, daß für taktweise Monomoden-Schwingungsimpulsaussendung

das Element (5) mit der Schalterfunktion parallel dem Schallgeber (1) liegt,

diese Induktivität (14) und die Kapazität des Schallgebers (1) so aufeinander abgestimmt sind, daß die sich ergebende Schwingkreisfrequenz der ausgewählten Resonanzfrequenz des Schallgebers (1) gleich ist und

das Element (5) mit Schalterfunktion mit dieser Resonanzfrequenz taktweise (6) mittels elektronischer Betätigungssteuerung zu schalten ist.

2. Anregeschaltung nach Anspruch 1, gekennzeichnet dadurch, daß die Schaltungseinrichtung (6) eine Flip-Flop-Schaltung (26) ist. (Fig. 3)

3. Anregeschaltung nach Anspruch 2, gekennzeichnet dadurch, daß die Flip-Flop-Schaltung (26) von einem Schwellenwertschalter (28) gesteuert ist, der auf einen vorgebbaren Stromwert I anspricht. (Fig. 3)

4. Anregeschaltung nach Anspruch 1, 2 oder 3, gekennzeichnet dadurch, daß ein Vorschaltkreis, bestehend aus einem vorgeschalteten Widerstand Rv und einer Kapazität Cv zwischen den Anschlüssen (2, 3) vorgesehen ist, mit dem bei im Betrieb am Schallgeber (1) auftretenden Kurzschluß ein Kurzschluß über die Induktivität (14) ausgeschlossen ist.

## Revendications

1. Circuit d'excitation comportant une source sonore piézoélectrique (1) et des bornes (2, 3) pour une alimentation en tension, ce circuit étant en outre constitué par une inductance (14) et un élément (5) ayant une fonction d'interrupteur, la source sonore (1) et cette inductance (14) d'une part et cette inductance (14) et l'élément (5) ayant la fonction d'un interrupteur d'autre part étant branchés respectivement en série avec les bornes (2, 3) prévues pour l'alimentation en tension, caractérisé par le fait que pour l'émission cadencée d'impulsions d'oscillations monomode

l'élément (5) possédant la fonction d'un interrupteur est branché en parallèle avec la source sonore (1),

cette inductance (14) et la capacité de la source sonore (1) sont réglées l'une sur l'autre de telle sorte que la fréquence obtenue du circuit oscillant est égale à la fréquence de résonance choisie de la source sonore (1), et

l'élément (5) possédant la fonction d'un interrupteur doit être commuté d'une manière cadencée (6) avec cette fréquence de résonance, à l'aide d'un système électronique de commande d'actionnement.

2. Circuit d'excitation suivant la revendication 1, caractérisé par le fait que le dispositif de commutation (6) est un circuit à bascule bistable (26). (Figure 3).

3. Circuit d'excitation suivant la revendication 2, caractérisé par le fait que le circuit à bascule bistable (26) est commandé par un interrupteur à valern de seuil (28), qui répond à une intensité I pouvant être prédéterminée. (Figure 3).

4. Circuit d'excitation suivant la revendication 1, 2 ou 3, caractérisé par le fait qu'un circuit série, constitué par une résistance Rv branchée en amont et une capacité Cv est prévu entre les bornes (2, 3), ce circuit excluant un court-circuit par l'intermédiaire de l'inductance (14), dans le cas d'un court-circuit apparaissant en fonctionnement au niveau de lma source sonore.

## Claims

1. Excitation circuit having a piezo-electric sound generator (1) and having terminals (2, 3) for a voltage supply which futher consists of an inductor (14) and an element (5) with switching function, the sound generator (1) and this inductor (14) on the one hand and this inductor (14) and the element (5) with switching function on the other hand being connected, in each case in series, to the terminals (2, 3) for the voltage supply, characterized in that, for single mode oscillatory impulse transmission as clock signals

the element (5) with the switching function is parallel to the sound generator (1),

this inductor (14) and the capacitor of the sound generator (1) are tuned with respect to one another in such a way that the resulting oscillatory circuit fequency is the same as the selected resonant frequency of the sound generator (1) and

the element (5) with switching function is to be connected to this resonant frequency via clock signals (6) by means of electronic actuator control.

2. Excitation circuit according to Claim 1, characterized in that the switching device (6) is a flip-flop circuit (26). (Fig. 30)

3. Excitation circuit according to Claim 2, characterized in that the flip-flop circuit (26) is controlled by a threshold value switch (28) which responds to a predetermined current value I (Fig. 3).

4. Excitation circuit according to Claim 1, 2 or 3, characterized in that a series circuit, consisting of a resistor Rv connected upstream and a capacitor Cv, is provided between the terminals (2, 3) with which, in the case of a short circuit occuring at the sound generator (1) during operation, a short circuit via the inductor (14) is excluded.

FIG 1

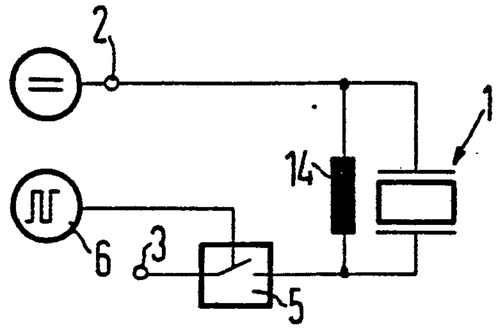


FIG 2

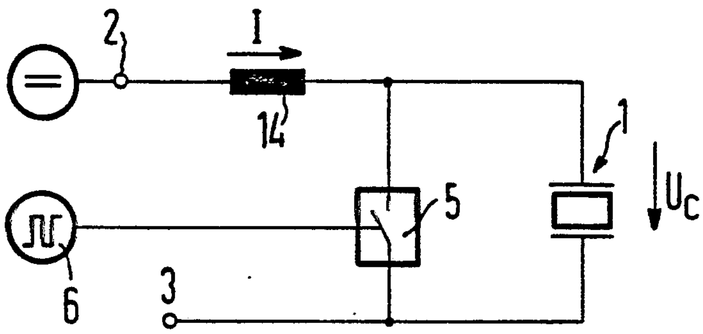


FIG 3

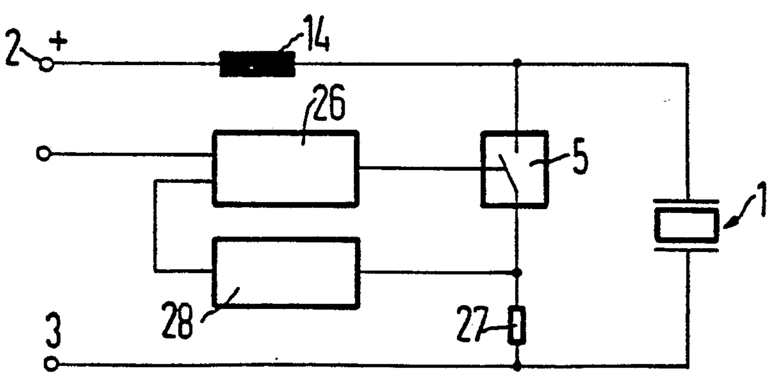

FIG 4

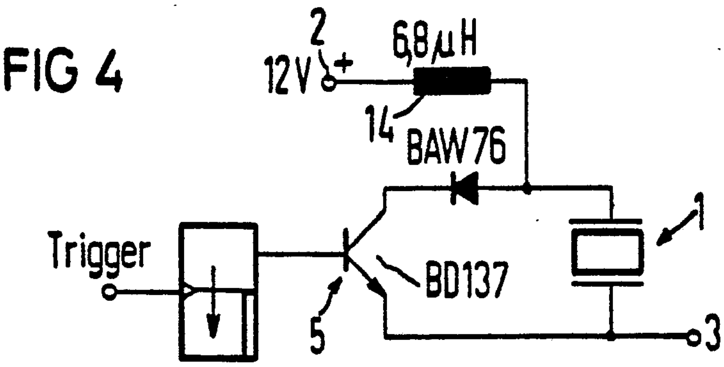


FIG 5

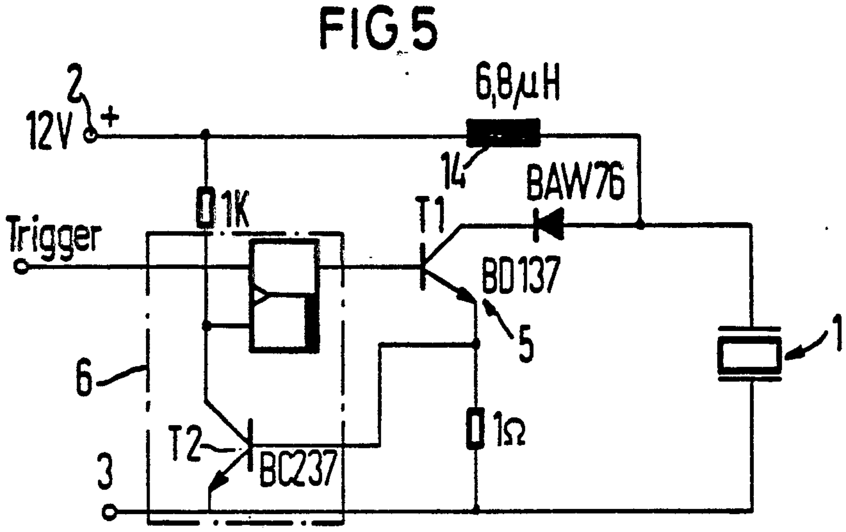


FIG 6